# FASCICULE DE BREVET EUROPEEN

(11) **EP 0 619 082 B1**
(45) Date de publication et mention de la délivrance du brevet: **03.06.1998**
(21) Numéro de dépôt: 94103486.0
(22) Date de dépôt: 08.03.1994
(51) Int. Cl.: A23L 1/176, A21D 13/00

(54) **Procédé de préparation de panure et produit pané obtenu**
Verfahren zur Herstellung von Panierbeschichtung und damit hergestelltes Produkt
Process for making coating crumbs and coated product obtained

(30) Priorité: 07.04.1993 EP 93105740
(43) Date de publication de la demande: 12.10.1994
(73) Titulaire: SOCIETE DES PRODUITS NESTLE S.A., 1800 Vevey (CH)
(72) Inventeur: Broberg, Lars, S-26392 Jonstorp (SE); Desjardins, Jean-Jacques, CH-1026 Denges (CH); Dupart, Pierre, CH-1028 Preverenges (CH)
(74) Mandataire: Vuille, Roman

(56) Documents cités:
- WO-A-83/01729
- FR-A- 2 458 227
- GB-A- 966 891
- GB-A- 2 095 529
- GB-A- 2 136 666
- GB-A- 2 176 089
- GB-A- 2 180 136
- US-A- 4 440 793
- US-A- 4 568 550

## Description

L'invention a pour objet une panure pour produits alimentaires destinés à être cuits au four, de même qu'un procédé de préparation d'une telle panure.

L'invention a également pour objet un produit alimentaire destiné à être cuit au four enrobé au moyen d'une telle panure, par exemple une crêpe fourrée, une pièce de viande ou de poisson.

Il est connu, par exemple par le brevet US 4,364,961, un procédé de préparation de panure dans lequel un mélange comprenant au moins 95% de farine, 2,5-3% de matière grasse et de la levure est préparé et mélangé dans un extrudeur, un gaz tel que le dioxyde de carbone est injecté en plusieurs endroits de l'extrudeur de manière à former un mélange aéré qui est alors chauffé puis extrudé à une température d'environ 30-100°C, sous une pression de 14-42 bars (200-600psig). Le produit ainsi obtenu est alors coupé en petits morceaux puis séché. On obtient ainsi une panure utilisable pour recouvrir des produits alimentaires tels que des morceaux de viande ou de poisson, qui seront ensuite régénérés par friture dans l'huile chaude.

Lors de cette étape ultérieure de friture dans l'huile, la panure va griller et rôtir et donner une apparence de produit cuit, une texture croustillante et un goût agréable au produit pané frit. Toutefois, ladite panure va également absorber une quantité importante de matière grasse (environ la moitié de son poids), ce qui va conduire à l'obtention d'un produit pané frit riche en matière grasse.

Or, la tendance actuelle des consommateurs est d'éviter la consommation de produits riches en matière grasse, en particulier les produits cuits par friture dans l'huile.

Une solution a été proposée par le brevet US 4,943,438, qui propose un nouveau type de panure pour recouvrir des produits susceptibles d'être régénérés dans un four conventionnel ou dans un four micro-ondes, les produits panés régénérés présentant toutefois un goût et une texture rappelant celle obtenue par friture à l'huile. Le produit pané selon ce document peut être obtenu selon plusieurs procédés, dont l'un consiste en une suite d'étapes particulières, dans lesquelles on recouvre le produit à paner avec un liant, puis on le recouvre de panure obtenue par extrusion d'une pâte comprenant environ 20% de farine et 80% d'eau, on cuit le produit ainsi pané dans un four, sous une certaine humidité de l'air, puis l'on vaporise de l'huile sur le produit cuit et l'on expose ledit produit pané et vaporisé à une température élevée, de l'ordre de 375-480°C, de manière à obtenir une surface du produit brunie et croustillante.

Le procédé de l'art antérieur, s'il donne des résultats satisfaisants, présente toutefois l'inconvénient de ne pas être facile et ni rapide à mettre en oeuvre, au vu des nombreuses étapes qu'il comporte. De plus, il nécessite de nombreuses manipulations dudit produit pané et l'utilisation d'installations particulières.

GB966891 décrit une composition pour enrobage comprenant, sous forme agglomérée, de 20-90% de matière farinacée non gélatinisée et de 1-12% d'eau, les particules de composition pouvant elle-même être enrobées de matières grasse.

US4568550 décrit un procédé de cuisson extrusion d'une pâte à base de farine, de la matière grasse pouvant être incorporée à la pâte jusqu'à concurrence de 8 parties pour 100 parties de farine, pour confectionner un produit à texture alvéolée et tendre semblable au pain.

GB2176089 décrit un procédé de cuisson extrusion d'un mélange à base de matière amylacée comprenant de 0 à 8% de matière grasse pour confectionner des croutons.

GB2095529 décrit un procédé de cuisson extrusion d'un mélange comprenant une matière amylacée, de l'eau, un agent de levage gazeux et jusqu'à 8% de matière grasse pour confectionner un produit particulaire présentant la texture du pain rassis.

GB2136666 décrit un procédé de cuisson extrusion d'une composition comprenant 43-93% d'une poudre amylacée, 0-30% de sucre et 2-12% de matière grasse pour confectionner un produit présentant la texture d'un biscuit.

La demanderesse s'est posé le problème de préparer une panure permettant d'obtenir un produit pané similaire en goût, en texture et en apparence à un produit pané régénéré par friture dans l'huile, ledit produit pané étant toutefois régénéré sans addition d'huile par passage dans un four conventionnel.

La présente invention par conséquent a pour objet un procédé de préparation d'une panure pour produits alimentaires destinés à être cuits au four, dans lequel
- on introduit dans un extrudeur un mélange comprenant une mouture de céréales, un sucre réducteur et une source de matière grasse en une quantité telle que le produit final présente un taux de matière grasse de 8-12% en poids,
- on effectue une cuisson-extrusion de ce mélange à une température de 150-230°C et à une pression supérieure à 45 bars,
- on broie le produit extrudé, puis
- on sèche le produit broyé.

Un avantage de l'invention est de permettre l'utilisation, au niveau industriel, des installations pour paner déjà existantes sans avoir à les adapter ou à les modifier, par exemple en fonction de la composition de la panure ou en fonction du procédé pour paner (pas d'étape supplémentaire de préfriture, par exemple).

Un autre avantage de l'invention est de permettre l'obtention de produits panés régénérés contenant peu de matière grasse, mais dont le goût et l'apparence sont similaires à ceux des produits panés frits, tout en gardant leur texture croustillante.

Dans la suite de la présente description, les pourcentages et parties sont donnés en poids.

La présente invention est particulièrement remarquable par le fait qu'elle permet la préparation d'une panure régénérable dans un four conventionnel grâce à un procédé alliant une étape de cuisson-extrusion dans des conditions particulières, sous haute pression et haute température, et une composition du mélange de départ particulier quant à sa teneur en matière grasse.

Dans le procédé selon la présente invention, on introduit tout d'abord dans un extrudeur un mélange comprenant une mouture de céréales, une source de glucides et une source de matière grasse.

La mouture de céréales peut être une semoule ou une farine de blé, de riz ou d'avoine, par exemple, seule ou en mélange. La source de glucides peut être du dextrose, du lactose, du glucose et/ou du fructose, seul ou en mélange. Cette source de glucides comprend des sucres réducteurs qui permettent de donner par réaction de Maillard une belle couleur à la panure, après régénération.

La source de matière grasse peut être, par exemple, de l'huile de palme hydrogénée. On peut utiliser en fait tout type de matière grasse; toutefois, si l'on souhaite conserver la panure un certain temps, il est nécessaire d'utiliser une matière grasse qui ne rancit pas, donc une matière grasse comprenant principalement des acides gras saturés.

On ajoute la source de matière grasse dans le mélange à extruder en une quantité telle que la panure finale en contient de 8 à 12%. On peut également ajouter audit mélange des sels, épices, colorants et tout additif alimentaire admissible, tel que de la poudre de lait écrémé.

On peut également ajouter de l'eau de manière à obtenir un mélange pouvant être extrudé, c'est-à-dire présentant un taux de matière sèche d'au moins 75%, généralement de l'ordre de 75-80%.

On peut utiliser un cuiseur-extrudeur mono-vis ou bi-vis.

Si l'on utilise un cuiseur-extrudeur mono-vis, il est important de préparer au préalable un mélange parfaitement homogène des différentes matières premières et d'ajuster le taux de matière sèche en conséquence, par exemple de l'ordre de 75-82%. De plus, dans un cuiseur-extrudeur mono-vis, la température maximum atteignable peut constituer une limite au procédé selon l'invention.

Dans ce cas, il est préférable d'utiliser un cuiseur-extrudeur bi-vis, avec lequel on peut atteindre des températures beaucoup plus élevées. Un autre avantage du bi-vis est qu'il n'est pas nécessaire de préparer un mélange des différentes matières premières avant de l'introduire dans l'extrudeur; il est en effet possible d'introduire chaque matière première indépendamment, l'une après l'autre, et d'ajuster le taux de matière sèche ensuite. Dans ce cas, la totalité des matières premières est mélangée dans une première partie de l'extrudeur.

L'extrusion est effectuée à une température de 150-230°C, sous une pression d'au moins 45 bars et pendant un temps court, de l'ordre de 30-80 secondes. On utilise de préférence des vis tournant à une vitesse rapide, de l'ordre de 200-250 tours par minute. Ces conditions d'extrusion permettent d'obtenir une expansion du produit telle que souhaitée.

On obtient, à la sortie de l'extrudeur, un produit sous forme de boulettes présentant un taux de matière sèche de l'ordre de 85-92%.

Le produit extrudé est alors broyé, par exemple dans un broyeur ou un moulin classique, de manière à obtenir des morceaux de forme irrégulière, d'une taille de l'ordre de 0,5-2,0 mm.

Le produit extrudé et broyé est alors séché à l'aide d'un appareil pouvant sécher un produit pulvérulent, par exemple un sécheur à un lit fluidisé. On sèche ainsi jusqu'à un taux de matière sèche usuel pour ce type de produit, de l'ordre de 92-95%, ce qui permet une bonne conservation ultérieure du produit. La panure ainsi obtenue peut être conservée pendant au moins 12-18 mois à température ambiante, dans un endroit sec à l'abri de la lumière.

On obtient ainsi un produit susceptible d'être utilisé comme panure et pouvant être régénéré dans un four conventionnel, tout en permettant d'obtenir une apparence et un goût similaires à ceux obtenus par régénération par friture dans l'huile chaude, ainsi qu'une texture croustillante.

L'invention est illustrée plus en détail dans les exemples de réalisation suivants.

### Exemple 1

On prépare un mélange comprenant 33 kg de farine de blé, 2 kg d'un mélange de lactose et de dextrose, 1 kg de chlorure de sodium, et 0,6 kg de poudre de lait écrémé.
On introduit 9 kg de ce mélange, 1 kg d'huile de palme hydrogénée et 0,9 litre d'eau par la trémie d'alimentation d'un extrudeur bi-vis.
On extrude le mélange ainsi préparé à une température de 170°C environ, sous une pression de 90 bars, pendant environ 40-50 secondes (vitesse des vis environ 220 tours/minute).
Le produit qui sort de la filière d'extrusion présente un taux de matière sèche d'environ 88-89%.
Ce produit est alors broyé dans un broyeur, puis séché dans un sécheur à lit fluidisé, avec une température de l'air entrant de 105°C, pendant 6-7 minutes.

On obtient ainsi une panure se présentant sous forme d'une poudre de taille de l'ordre de 0,5-2,0 mm, présentant un taux de matière sèche de 92-93% et un taux de matière grasse d'environ 10%.

On recouvre une crêpe fourrée de 45 g avec 8 g de panure ainsi préparée et l'on passe le produit pané ainsi obtenu pendant 17 minutes, dans un four conventionnel préalablement chauffé à 180°C.

On obtient un produit pané prêt à la consommation, d'apparence extérieure, de goût et de texture similaires à ceux d'un produit de l'art antérieur régénéré par friture dans l'huile chaude, c'est-à-dire un goût traditionnel, une texture croustillante et, extérieurement, une belle couleur de produit cuit, dorée et homogène (sans taches de "non-cuit").

### Exemple 2

On prépare un mélange semblable à celui de l'exemple 1.
On introduit 9 kg de ce mélange, de l'huile de palme hydrogénée dans la quantité précisée dans le tableau ci-dessous, et 0,9 litre d'eau par la trémie d'alimentation d'un extrudeur bi-vis.
On extrude le mélange ainsi préparé, on le broie et on le sèche dans les mêmes conditions que dans l'exemple 1.

On obtient ainsi différentes panures présentant un taux de matière sèche de 92-93%.

On recouvre des crêpes fourrées avec les différentes panures ainsi préparées, et l'on passe les différents produits panés ainsi obtenus pendant 17 minutes, dans un four conventionnel préalablement chauffé à 180°C.

On fait déguster les différents produits panés à un groupe de 6 dégustateurs avertis, et l'on obtient les résultats suivants:

| **quantité d'huile (kg)** | **% d'huile** | **produit obtenu** |
|---|---|---|
| 0,5 | 5 | pas de croustillance, aspect non cuit |
| 0,8 | 8 | texture croustillante |
| 1,0 | 10 | aspect cuit, couleur dorée |
| 1,2 | 12 | goût traditionnel |
| 1,6 | 15 | texture grasse aspect cuit |

On remarque donc qu'un taux de matière grasse de 8-12% permet l'obtention d'une panure possédant les caractéristiques recherchées, qui après cuisson au four présente un aspect, un goût et une texture comparables à ceux d'un produit régénéré par cuisson dans l'huile, le produit selon l'invention présentant toutefois un taux de matière grasse beaucoup moins élevé.
Au-delà de 15%, le produit final, bien que correct, est trop gras. D'autre part, il est possible qu'une partie de la matière grasse ne se mélange plus, de façon homogène, aux autres composants dans l'extrudeur.

### Exemple 3

On prépare un mélange semblable à celui de l'exemple 1.
On introduit 9 kg de ce mélange, 1 kg d'huile de palme hydrogénée et 0,9 litre d'eau par la trémie d'alimentation d'un extrudeur bi-vis.
On extrude le mélange ainsi préparé à une température et sous une pression telles que précisées dans le tableau ci-dessous.
Le produit qui sort de la filière d'extrusion présente un taux de matière sèche d'environ 89%.
Ce produit est alors broyé puis séché de manière similaire à celle de l'exemple 1.
On obtient ainsi différentes panures présentant un taux de matière sèche d'environ 93% et de matière grasse d'environ 9,5%.

On recouvre des morceaux de poissons avec les différentes panures ainsi préparées, et l'on passe les différents produits panés ainsi obtenus pendant 17 minutes, dans un four conventionnel préalablement chauffé à 180°C.

On fait déguster les différents produits panés à un groupe de 6 dégustateurs avertis, et l'on obtient les résultats suivants:

| **Température (°C)** | **Pression (bars)** | **Produit obtenu** |
|---|---|---|
| 100 | 90 | produit dur |
| 140 | 90 | pas de croustillance |
| 175 | 90 | texture croustillante |
| 215 | 90 | aspect cuit, doré et homogène |
| 250 | 90 | pas de croustillance, aspect de surface hétérogène |
| 190 | 40 | produit dur |
| 190 | 70 | texture croustillante |
| 190 | 110 | produit correct |
| 190 | 150 | pas de croustillance |

On remarque donc que, pour une pression de 90 bars, la température lors de l'extrusion ne doit pas être trop basse ni trop élevée si l'on souhaite obtenir un produit croustillant et d'aspect correct similaire à l'art antérieur.
Il en est de même avec la pression d'extrusion qui ne doit pas être trop faible si l'on veut un produit croustillant.

### Exemple 4

On prépare un mélange similaire à celui de l'exemple 1, que l'on extrude dans les mêmes conditions.
Le produit qui sort de la filière d'extrusion présente un taux de matière sèche de 89%.

Ce produit est alors séché dans un sécheur à lit fluidisé (température de l'air entrant 105°C) pendant environ 6-7 minutes, de manière à obtenir un produit présentant un taux de matière sèche de 92-93%, qui est alors broyé dans un broyeur de manière à obtenir une panure sous forme de poudre.
On observe, lors du broyage à sec, la génération d'une quantité importante de fines, c'est-à-dire de particules de très petite taille, en une quantité d'environ 10%.
A l'opposé, lorsque l'on broie le produit à l'état humide, avant de le sécher, on n'observe pas de génération de fines.

On recouvre une crêpe fourrée de 45 g avec 8 g de panure ainsi préparée et l'on passe le produit pané ainsi obtenu pendant 16-17 minutes, dans un four conventionnel préalablement chauffé à 180°C. On obtient un produit pané prêt à la consommation, de texture peu croustillante, d'aspect extérieur pâle, non cuit et de goût correct.

Il est donc préférable de broyer le produit extrudé avant de le sécher, lorsqu'il présente encore un certain taux d'humidité, ce qui permet, d'une part l'obtention d'une panure correcte après régénération au four, et d'autre part, une perte moins importante de produit car une quantité de fines moindre.

## Revendications

1. Procédé de préparation d'une panure pour produits alimentaires destinés à être cuits au four, dans lequel
- on introduit dans un extrudeur un mélange comprenant une mouture de céréales, un sucre réducteur et une source de matière grasse en une quantité telle que le produit final présente un taux de matière grasse de 8-12% en poids,
- on effectue une cuisson-extrusion de ce mélange à une température de 150-230°C et à une pression supérieure à 45 bars,
- on broie le produit extrudé, puis
- on sèche le produit broyé.

2. Procédé selon la revendication 1, caractérisé en ce que l'extrusion est réalisée dans un extrudeur bi-vis.

3. Procédé selon la revendication 1, caractérisé en ce que le temps de passage dans l'extrudeur est supérieur à 30 secondes.

4. Procédé selon la revendication 1, caractérisé en ce que la mouture de céréales est une semoule ou une farine de blé, de riz ou d'avoine, seule ou en mélange.

5. Procédé selon la revendication 1, caractérisé en ce que le sucre réducteur est du lactose, du glucose et/ou du fructose, seul ou en mélange.

6. Procédé selon la revendication 1, caractérisé en ce que la matière grasse est de l'huile de palme hydrogénée.

7. Panure susceptible d'être produite par le procédé selon l'une des revendications 1 à 6.

8. Produit alimentaire destiné à être cuit au four enrobé de panure selon la revendication 7.

## Claims

1. Process for preparing breadcrumbs for food products intended to be oven-cooked, wherein
- there is introduced into an extruder a mixture comprising ground cereals, a reducing sugar and a source of fats in such a quantity that the final product has a fat content of 8-12 parts by weight,
- this mixture is extrusion-cooked at a temperature of 150-230°C and at a pressure above 45 bar,
- the extruded product is ground, and
- the ground product is then dried.

2. Process according to claim 1, characterized in that extrusion is carried out in a twin-screw extruder.

3. Process according to claim 1, characterized in that the passage time through the extruder is longer than 30 seconds.

4. Process according to claim 1, characterized in that the ground cereals are a semolina or flour of wheat, rice or oats, alone or mixed.

5. Process according to claim 1, characterized in that the reducing sugar is lactose, glucose and/or fructose, alone or mixed.

6. Process according to claim 1, characterized in that the fats consist of hydrogenated palm oil.

7. Breadcrumbs which can be produced by the process according to one of claims 1 to 6.

8. Food product intended to be oven-cooked coated with the breadcrumbs according to claim 7.

## Patentansprüche

1. Verfahren zur Herstellung einer Panierung für Lebensmittelprodukte, die für ein Garmachen im Ofen bestimmt sind, bei dem man
- in einen Extruder eine Mischung eingibt, die ein Getreidemahlgut, reduzierenden Zucker und eine Quelle für ein Fett in einer solchen Menge enthält, daß das Endprodukt einen prozentualen Fettgehalt von 8-12 Gew.-% aufweist,
- eine Kochextrusion dieser Mischung bei einer Temperatur von 150-230°C und einem Druck, der über 45 bar liegt, durchführt,
- das extrudierte Produkt zerkleinert, und
- das zerkleinerte Produkt trocknet.

2. Verfahren nach Anspruch 1, dadurch gekennzeichnet, daß man die Extrusion in einem Zweischneckenextruder durchführt

3. Verfahren nach Anspruch 1, dadurch gekennzeichnet, daß die Zeit für einen Durchgang durch den Extruder mehr als 30 s beträgt.

4. Verfahren nach Anspruch 1, dadurch gekennzeichnet, daß das Getreidemahlgut ein Weizen-, Reis- oder Hafergrieß oder -mehl allein oder im Gemisch ist.

5. Verfahren nach Anspruch 1, dadurch gekennzeichnet, daß der reduzierende Zucker Lactose, Glucose und/oder Fructose allein oder im Gemisch ist.

6. Verfahren nach Anspruch 1, dadurch gekennzeichnet, daß das Fett hydriertes Palmöl ist.

7. Panierung, die nach dem Verfahren nach einem der Ansprüche 1 bis 6 herstellbar ist.

8. Lebensmittelprodukt, das für ein Garmachen in einem Ofen bestimmt ist und von einer Panierung nach Anspruch 7 umhüllt ist.
